Europäisches Patentamt

European Patent Office

Office européen des brevets

(11) Numéro de publication : **0 440 601 B1**

(12) **FASCICULE DE BREVET EUROPEEN**

(19)

(45) Date de publication du fascicule du brevet :
30.12.92 Bulletin 92/53

(21) Numéro de dépôt : **88909538.6**

(22) Date de dépôt : **12.10.88**

(86) Numéro de dépôt international :
**PCT/FR88/00503**

(87) Numéro de publication internationale :
**WO 90/03737 19.04.90 Gazette 90/09**

(51) Int. Cl.⁵ : **A23B 4/00,** A23L 1/33

(54) **CUISSON SOUS ATMOSPHERE GAZEUSE.**

(43) Date de publication de la demande :
**14.08.91 Bulletin 91/33**

(45) Mention de la délivrance du brevet :
**30.12.92 Bulletin 92/53**

(84) Etats contractants désignés :
**AT BE CH DE FR GB IT LI LU NL SE**

(56) Documents cités :
**EP-A- 0 242 183**
**FR-A- 2 613 588**
**Patent Abstracts of Japan, vol. 9, no. 59, C-270,**
**the abstract of JP 59-196030, published**
**1984-11-07 (MITSUBISHI GAS KAGAKUK.K.)**
**Patent Abstracts of Japan, vol. 7, no. 242,**
**C-192, the abstract of JP 58-129930 (ASAHI**
**KASEI KOGYO K.K.)**

(73) Titulaire : **PESCHMER**
**10 rue Victor-Noir**
**F-92200 Neuilly-sur-Seine (FR)**

(72) Inventeur : **BEALLE, Roger, Alain, Michel**
**19, rue de la Bonne-Fontaine**
**F-56170 Quiberon (FR)**

(74) Mandataire : **Phélip, Bruno et al**
**c/o Cabinet Harlé & Phélip 21, rue de La**
**Rochefoucauld**
**F-75009 Paris (FR)**

## Description

La présente invention concerne un procédé de cuisson en emballage sous-vide d'aliments sous coque dure, tels que notamment les crustacés et coquillages; l'invention concerne également les produits à conservation obtenus par le-dit procédé.

Depuis un bon nombre d'années, on proposa de conserver des aliments divers sous-vide, l'emballage étant par exemple une barquette en plastique ou un film mince de matière plastique mis sous forme de sachets. Les aliments crus ainsi emballés, conservés à basse température pouvant être ensuite utilisés pour des opérations culinaires usuelles après ouverture des sachets. On connait également des plats cuisinés emballés sous-vide total ou partiel dans de tels sachets ou barquettes qui, une fois remplis du "plat" en cause sont vidés d'air et portés à une température de cuisson (de l(ordre en général de 65 à 85°C environ), puis sont refroidis jusqu'aux environs de 3 à 10°C et enfin stockés à +3°C au maximum. L'attrait de tels procédés d'emballage et de cuisson est qu'ils permettent de garder aux produits totalement, en pratique, les qualités organoleptiques des aliments employés. D'autre-part, ces procédés de cuisson apparaissent comme pouvant rendre de grands services, en particulier dans la restauration d'entreprise, notamment dans la simplification des travaux à faire sur place, par l'égalité des portions servies et par la qualité constante des produits distribués. Il faut pour mener à bien ces procédés connus, non seulement des matériels précis de mise en sachets, de mesure du vide et des températures, mais aussi disposer des informations correspondantes à chacun des constituants des "plats" respectifs quant au taux de vide, aux température de cuisson et de stockage obligatoire, car ces paramètres varient avec les produits. On notera enfin que les fabrications de tels aliments sous-vide sont soumises à une règlementation très stricte de la durée, de 6 à 21 jours actuellement, selon les plats de présentation aux consommateurs.

Le plus souvent, les sachets sont des films de faible épaisseur qui doivent être choisis de manière à résister aux effets de la pression développée au moment de la cuisson d'une part, et aussi aux chocs dûs aux manipulations diverses.

Il est intéressant de rappeler que la conservation de denrées alimentaires crues périssables sous atmosphère gazeuse contrôlée est aussi déjà connue. En-particulier, un des procédés de conservation de ce type consiste à introduire le denrée dans un emballage imperméable aux gaz, à faire le vide ou purger, puis à injecter un mélange binaire constitué par 20 à 40% d'anhydride carbonique et 80 à 20% d'azote et, enfin à sceller l'emballage. Ce procédé est destiné à la conservation pendant 21 jours à +4°C de pommes de terre ou autres tubercules à racines, crus, lavés à l'eau, entiers ou découpés.

Parmi les produits alimentaires actuellement sur les marchés et obtenus par traitement sous-vide et cuisson, soit d'aliments bruts ou sous forme de plats préparés, on trouve les légumes, les viandes, les poissons, préparés ou non. Toutefois, on s'est heurté à l'impossibilité pratique d'effectuer la cuisson sousvide dans les conditions rappelées ci-dessus lorsqu'on a voulu emballer (et cuire) des crustacés à carapace, tels que homards, crabes, langoustines ou des mollusques à coquilles; les sachets usuels pour le traitement sous-vide, puis à chaud, étaient en-effet percés par les aspérités des animaux à cuire. Un palliatif coûteux de ces inconvénients majeurs a consisté à emballer les crustacés et coquillages dans des sachets (beaucoup plus épais que les films usuels) contenant une certaine quantité d'eau (éventuellement eau de mer) dans laquelle la bête flottait dans le sac scellé. Mais on ne pouvait ainsi emballer que des animaux "nature" de ce type, sans possibilité d'obtenir des plats préparés: c'est ainsi que le contenu, propement extrait de la carapace correspondante, des pinces de crabes a pu être disposé avec la sauce dans un emballage alvéolé. Devant cette situation et compte tenu de l'intérêt commercial offert par les crustacés et coquillages, notamment crabes, homards, langoustes et araignées de mer, présentés sous forme de plats préparés, ou simplement précuits, pour divers menus, on a cherché le moyen simple de les emballer sous-vide dans des sachets de film très mince usuel, tout en respectant les règlementations en vigueur pour leur bonne conservation, au-moins pendant la durée maximale règlementaire actuelle de mise en consommation; à ce sujet, on a porté l'attention sur la prolongation du délai de "mise en consommation" au delà du délai maximal des 21 jours actuels, qui n'est d'ailleurs qu'exceptionnellement atteint avec les procédures actuelles, étant entendu que cette extension désirée devrait remplir totalement les conditions sanitaires et organologiques fixées par les règlements. Au cours des recherches et travaux effectués en vue d'obtenir, en tout cas pour les crustacés visés plus spécialement, on s'est heurté, comme prévu, au problème de la température sensiblement supérieure, souvent plus de 100°C, dont l'utilisation était prévue, comme entraînant souvent une détérioration prononcée de l'aspect, et parfois des autres qualités requises par le consommateur. Enfin, on a cherché à prendre en compte le fait que pour certains crustacés, en-particulier les araignées de mer, il-y-avait un bon nombre de chances (sinon une certitude) que des toxines, issues de Clostridium Phasa soient présentes, comme elles le sont dans les coquillages.

Les travaux et recherches effectués à cet effet ont permis de mettre au point un procédé de cuisson de crustacés et coquillages, précuits seulement, ou sous forme de plats préparés, en vue d'une mise en consommation après délai de stockage allant jusqu'à 28 jours au moins et répondant aux qualités fixées par les normes en vigueur, dans des sachets ou emballages plastique mis sous-vide contrôlé portés à la température de cuisson, refroidis et stockés à température constante d'environ 3°C.

Le procédé de cuisson, selon l'invention, est caractérisé en ce que l'on rend le crustacé rigide en le soumettant, à plat sur le ventre ou sur le dos, à une température d'environ 0°C pour empêcher ses mouvements de dégrader le sachet qui le recevra. On met le crustacé dans le sachet de film mince (épaisseur d'environ 98 micromètres on scelle le sachet en y faisant un vide poussé puis en injectant un gaz formé de CO2 et éventuellement de O et de Az, de manière que la pression finale dans le sachet soit comprise entre environ 0,1 et 0,5 bar, on soumet le sachet avec son contenu à une cuisson à la vapeur d'eau à environ 75 à 130°C pendant un temps de 40 à 70 minutes environ, on refroidit les sachets contenant le crustacé cuit jusqu'à une température d'environ 5°C et on conserve à une température constante de 3°C jusqu'au moment de l'utilisation.

Les températures de cuisson, la composition du mélange gazeux et la durée de cuisson sont définis expérimentalement pour chaque type de crustacé à traiter; il-y-a lieu de noter ce qui suit pour la meilleure mise en oeuvre du procédé de l'invention: le gaz injecté peut être du CO2 seul lorsqu'on est certain qu'il ne se trouve pas de Clostridium Phasa dans les crustacés traités, ainsi que pour les températures inférieures à 100°C, effectuées dans des installations usuelles. Lorsque l'on veut prendre toutes les précautions, et donc prévoir (dans le doute) ce Clostridium Phasa, on injecte un mélange de CO2 et O dans la proportion de 80 à 95% de CO2 et 5 à 20% de O, de préférence. Dans ces conditions les installations permettent de fournir des crustacés ayant toutes les qualités organoleptiques et sanitaires pendant 21 jours au moins.

En utilisant des appareils à contre pression de vapeur pour les traitements de 100 à 130°C environ, on a intérêt à injecter, pour pallier toute dégradation des propriétés organoleptiques et sanitaires du produit, un mélange de CO2, O et Az (aux proportions de CO2 / Az étant de préférence égale à 50/50 et celle de CO2 / O étant 95/5, comme dans le cas où on n'utilise pas d'azote). Dans ces dernières conditions de travail, la durée de conservation jusqu'à l'utilisation est de 28 jours au moins. Ces durées s'étendent avec stockage constant à 3°C.

En opérant avec CO2 et Az, on a naturellement constaté un dissolution partielle de CO2 dans l'eau du sachet, avec le risque de contacts aléatoires du produit (par-exemple crabe) avec le sac. Ceci entraine la nécessité d'augmenter la proportion d'Az dans le mélange injecté, voir même de n'utiliser que de l'Azote pour la cuisson d'aliments étant suceptibles de contenir des microbes anaérobiques (coquillages par exemple) ou ayant la propriété de transformer l'oxygène sous toutes ses formes (si on utilise une semi-cuisson, par exemple des algues), avec l'inconvénient d'un accroissement de la durée de cuisson. On sait que le CO2 est bon conducteur thermique alors que l'azote constitue une barrière thermique, étant à inertie thermique sensiblement supérieure à celle du CO2. On a alors pensé que cet inconvénient pourrait être pallié en trouvant le moyen d'équilibrer en temps final de cuisson, sans changer les qualités du produit, l'évolution défavorable des qualités du CO2 due à sa dissolution ou son abscence, nécessaire dès le départ du procédé.

On a alors constaté que cet "équilibrage" pouvait être obtenu en injectant dans le sachet, en plus de l'azote det du CO2, ou en plus de l'azote uniquement, un certain volume d'Hélium (gaz inerte) avant la mise en cuisson. Dans ces conditions, l'Hélium sert en-fait de catalyseur, compensant les effets défavorables de la dissolution du CO2 ou de son abscence, et conduit à une diminution très importante de la durée de cuisson du produit emballé dans le sachet.

L'Hélium peut être utilisé d'une manière générale pour la cuisson sous emballage d'aliments divers, notamment de crustacés, coquillages et autres produits alimentaires ne devant pas subir la pression atmosphèrique externe (poisson vidé, volailles vidées, entières, soufflés,etc).

La caractéristique de la cuisson sous atmosphère gazeuse (utilisant soit Azote, soit CO2, soit Hélium, associés ou non) est d'éviter l'écrasement des produits ou tout contact des enveloppes avec des aspérités du produit traité, avant, pendant et après cuisson, tout en offrant les possibilités de vendre le produit dans son emballage de cuisson.

De préférence, l'Hélium est injecté sous une pression comprise entre 0,05 et 0,30 bar, avantageusement de 0,05 bar, dans le sachet contenant le produit à cuire, associé ou pas avec un mélange de CO2 et Az ou Az seul ou CO2 seul, aux pressions usuelles citées en première partie.

On trouvera ci-après des exemples de réalisation du procédé selon l'invention pour la cuisson sous-vide de crustacés et coquillages à conservation prolongée pour utilisation.

Exemple 1:

On a traité un crabe de 350g; après 15 minutes de séjour sur le dos à 0°C, le crabe étant "endormi", on l'a introduit dans un sachet de film plastique de 90 micromètres où on a fait le vide jusqu'à moins de 0,1 bar. On a injecté dans le sachet scellé par tous moyens connus, du CO2, jusqu'à obtenir une pression de 0,1 bar. Le sachet scellé a alors été chauffé dans un appareil usuel à vapeur d'eau jusqu'à une température de 90°C. La cuisson a été maintenue pendant 60 minutes. On a refroidi le sachet comme usuellement jusqu'à la température de 5°C puis on a maintenu le sachet à +3°C pendant 21 jours. Le produit présentait alors peu de jus, les sacs étant bien collés au crabe; on a noté une odeur agréable à l'ouverture et que les pattes se détachaient très facilement. Après 28 jours, on a constaté toujours le même état, tant organoleptique que sanitaire.

Exemple 2:

On a traité un homard de 750g dans les mêmes conditions que celles de l'exemple 1: on a obtenu les mêmes résultats après 28 jours; dans cet exemple, la pression du gaz injecté a été de 0,25 bar.

Exemple 3:

On a traité une araignée de mer de 500g. Sacahnt que ces bêtes ont souvent du Clostridium Phasa, on a injecté de l'Oxygène, de l'Azote et du $CO_2$, à-savoir: O = 5%, Az = 45%, $CO_2$ = 50%. On a procédé à la cuisson dans un appareillage à contre pression de vapeur (température de cuisson = 120°C, durée de cuisson = 40 minutes). Après 28 jours, le produit répondait à toutes les conditions règlementaires, organoleptiques et sanitaires, et notamment, ne présentait aucune trace due au Clostridium Phasa; il était d'excellentes qualités marchandes.

Avec des crabes de taille moyenne, placés dans des sachets contenant $CO_2$ seul, l'injection d'Hélium sous 0,05 bar a entrainé une diminution du temps de cuisson de 10 à 25%, pour un crabe emballé dans un sachet, un mélange $CO_2$ (50%) et Az (50%), l'injection d'Hélium sous 0,05 bar a entrainé une diminution de 50%. Comme l'Hélium est très volatil, il est utilisable seulement en très faible proportion (environ 10% au maximum) dans un mélange $CO_2$ / Az, ou dans $CO_2$ seul ou dans Az seul. Un essai sur un crabe dans ces conditions, effectué au four micron-ondes donne une cuisson parfaitement réussi en 5 à 7 minutes. Comme dans tous les cas, la cuisson est parfaite. On voit immédiatement l'intérêt commercial de la présente invention.

Par ailleurs, des langoustines ont été cuites selon ce procédé et ont obtenu un délai limite de consommation de 21 jours et de 42 jours à +4°C, suivant le matériel de cuisson utilisé.

On détermine facilement par quelques essais les quantités respectives de $CO_2$, Az et Hélium à utiliser pour un aliment donné. On peut enfin, selon l'invention, introduire dans le sachet, en même temps que le produit cru à traiter, tous assaisonnements désirés en-fonction du plat final auquel il est destiné, par du sel, poivre, aromates, sauces (moules marinières...) etc.

On voit donc que le procédé selon l'invention permet sans difficulté d'obtenir des crustacés et autres produits d'excellentes qualités marchandes et organoleptiques, en permettant un délai de mise en consommation parfaitement sûr et avantageusement prolongé; ces produits répondant en-outre aux désirs de la clientèle de "voir le crustacé" et de pouvoir s'en servir froid ou chaud, au même titre que les autres produits.

On peut bien évidemment utiliser le présent procédé avec des barquettes ou plateaux sur lesquels on dépose le produit cru et qui sont ensuite combinés avec un film plastique par thermoformage.

**Revendications**

1. Procédé de cuisson sous atmosphère gazeuse (utilisant sot Azote, soit $CO_2$, soit Hélium, associés ou pas) d'aliments sous coque dure ou pas afin d'éviter l'écrasement des produits (exemple du soufflé au fromage) ou tout contact des enveloppes avec des aspérités du produit traité (crustacés crus, coquillages etc) avant, pendant et après cuisson du produit alimentaire en vue d'une conservation prolongée en l'état final ou congelé ou surgelé, caractérisé en ce que l'on rend le crustacé rigide en le soumettant à plat sur le ventre ou sur le dos à une température d'environ 0°C pendant quelques minutes, que l'on met le crustacé dans un sachet de film mince (environ 90 micromètres par exemple), que l'on scelle le sac et où l'on fait un vide poussé et que l'on injecte dans le sachet un gaz formé de $CO_2$, éventuellement de O et d'Az et d'Hélium, de manière que la pression finale dans le sachet soit comprise entre 0,1 et 0,5 bar, que l'on soumet le sachet avec son contenu à une cuisson sous vapeur d'eau d'environ 70 à 130°C pendant une durée de une à 90 minutes environ, que l'on refroidit le sachet contenant le crustacé ou autre aliment cuit jusqu'à une température pouvant aller de +5 à -40°C et que l'on maintient le sachet à la température choisie suivant le mode de commercialisation utilisée jusqu'au moment de son utilisation.

2. Procédé selon la revendication, caractérisé en ce que l'on ajoute avec le crustacé ou autre aliment, des assaisonnements désirés dans le sac avant scellement.

3. Procédé selon l'une des revendications précédentes, caractérisé en ce que l'on injecte uniquement du $CO_2$ sous une pression entre 0,1 et 0,5 bar.

4. Procédé selon l'une des revendications 1 à 3, caractérisé en ce que l'on injecte un gaz formé de $CO_2$/O, à raison de 80 à 95% de $CO_2$ et de 20 à 5% de O.

5. Procédé selon l'une au moins des revendications 1, 2 et 4, caractérisé en ce que l'on injecte du gaz formé de CO2, O et Az, le pourcentage de CO2/Az étant de 50/50 et celui du O étant entre 20 et 5% du CO2 (de préférence 5%) et que l'on pratique une température de cuisson sous vapeur à contre-pression jusqu'à 130°C.

6. Procédé selon l'une des revendications 1, 2, caractérisé en ce que l'on injecte CO2 et Az au pourcentage de CO2 5 à 95% et Az de 95 à 5%.

7. Procédé selon l'une des revendication 1, 2, caractérisé en ce que l'on injecte uniquement de l'Azote sous une pression de 0,1 à 0,5 bar et que l'on soumet le contenant avec son contenu à une température de 70 à 130°C pendant une durée de 40 à 70 minutes et que l'on refroidit entre +5 et -40°C.

8. Procédé selon l'une des revendications 1, 2, 3, 4, 5, 6, 7, caractérisé en ce que l'on injecte de l'Hélium sous une pression de 0,05 à 0,30 bar et que l'on soumet le sachet contenant avec son contenu à une cuisson sous vapeur à une température de 40 à 130°C pendant une durée de 1 à quelques heures et que l'on refroidit de +5 à -40°C, suivant l'état commercial désiré de frais, congelé, surgelé, pasteurisé, stérilisé.

9. Procédé selon l'une des revendications 1, 2, 3, 4, 5, 6, 7, 8, caractérisé en ce que l'on utilise tout appareil de cuisson (four, bain-marie, autoclave ou similaire, enceinte à micro-ondes, infrarouges etc), toute méthode de refroidissement (froid cryogènique, mécanique,liquide) afin d'obtenir une cuisson sous atmosphère gazeuse telle que définie dans les revendications précédentes.

10. Crustacés, coquillages et autres aliments cuit selon l'une ou l'autre des revendications précédentes et susceptibles d'être mis sur le marché pour utilisation en l'état frais, congelé ou stérilisé.

## Claims

1. Process of cooking, under a gaseous atmosphere (using either Nitrogen, or $CO_2$, or Helium, combined or not), shelled or unshelled foodstuffs so as to avoid crushing the products (for example cheese souffle) or any contact between the treated product envelopes with asperities (raw crustacea, shellfish and the like) before, during and after cooking the food product with a view to prolonged preservation in the final fresh or frozen or deep frozen state, characterised in that the crustacea are stiffened by subjecting them, flat on their front or back, to a temperature of about 0°C for a few minutes, in that the crustacea are placed in a thin-film bag (about 90 microns for example), in that the bag is sealed and a high vacuum is created and a gas consisting of $CO_2$, optionally O and N and Helium, is injected into the bag so that the final pressure in the bag is between 0.1 and 0.5 bar, in that the bag and its contents are subjected to cooking in steam at about 70 to 130°C for a period of about one to 90 minutes, in that the bag, containing the crustacea or another cooked foodstuff, is cooled to a temperature which may range from +5 to -40°C and in that the bag is kept at the chosen temperature depending on the marketing method adopted, until it is used.

2. Process according to the claim, characterised in that appropriate seasonings are placed in the bag with the crustacea or other foodstuff before sealing.

3. Process according to one of the preceding claims, characterised in that $CO_2$ alone is injected at a pressure of between 0.1 and 0.5 bar.

4. Process according to one of Claims 1 to 3, characterised in that a gas consisting of $CO_2$/O, in an amount of 80 to 95% of $CO_2$ and 20 to 5% of O, is injected.

5. Process according to at least one of Claims 1, 2 and 4, characterised in that a gas consisting of $CO_2$, O and N is injected, the proportion of $CO_2$/N being 50/50 and that of O being between 20 and 5% of $CO_2$ (preferably 5%) and in that a cooking temperature, in counterpressure steam, of up to 130°C is used.

6. Process according to one of Claims 1 and 2, characterised in that $CO_2$ and N are injected in a proportion of 5 to 95% $CO_2$ and 95 to 5% N.

7. Process according to one of Claims 1 and 2, characterised in that nitrogen alone is injected at a pressure of 0.1 to 0.5 bar and in that the container and its contents are subjected to a temperature of 70 to 130°C for a period of 40 to 70 minutes and in that they are cooled to between +5 and -40°C.

8. Process according to one of Claims 1, 2, 3, 4, 5, 6 and 7, characterised in that Helium is injected at a pressure of 0.05 to 0.30 bar and in that the container bag and its contents are subjected to steam cooking at a temperature of 40 to 130°C for a period of 1 to a few hours and in that they are cooled to +5 to -40°C depending on the state desired for marketing: fresh, frozen, deep frozen, pasteurised or sterilised.

9. Process according to one of Claims 1, 2, 3, 4, 5, 6, 7 and 8, characterised in that any cooking apparatus (oven, water bath, autoclave or the like, microwave oven, infrared radiation and the like), and any cooling method (cryogenic, mechanical or liquid cooling) is used in order to achieve cooking under a gaseous atmosphere as defined in the preceding claims.

10. Crustacea, shellfish and other foodstuffs cooked according to any one of the preceding claims and which can be marketed for use in the fresh, frozen or sterilised state.

**Patentansprüche**

1. Verfahren zum Kochen unter Gasatmosphäre (unter Verwendung von Stickstoff, $CO_2$, oder Helium, gemeinsam oder allein) von Nahrungsmitteln unter harter Schale oder nicht, um das Zerdrücken der Produkte (Beispiel des Käseauflaufs) oder jede Berührung der Verpackungen mit den Unebenheiten des behandelten Produkts (rohe Krustentiere, Muscheln, usw.), vor, während und nach dem Kochen des Nahrungsmittels zu vermeiden, um eine verlängerte Konservierung im frischen oder tiefgekühlten oder tiefgefrorenen Endzustand zu erreichen, dadurch gekennzeichnet, daß man das Schalentier starr macht, indem man es einige Minuten lang bei einer Temperatur von etwa 0°C flach auf die Unterseite oder den Rücken legt, daß man das Schalentier in einen Beutel aus dünner Folie (ungefähr 90 μm zum Beispiel) legt, daß man den Beutel versiegelt und ein Feinvakuum anlegt und daß man in den Beutel ein Gas injiziert, bestehend aus $CO_2$, eventuell aus Sauerstoff, Stickstoff und Helium, derart, daß der Enddruck in dem Beutel zwischen 0,1 und 0,5 bar liegt, daß man den Beutel mit seinem Inhalt dem Kochen unter Wasserdampf von etwa 70 bis 130 °C während der Dauer von ungefähr einer bis 90 Minuten aussetzt, daß man den Beutel mit dem Schalentier oder einem anderen gekochten Nahrungsmittel auf eine Temperatur abkühlt, die von +5 °C bis -40 °C reichen kann, und daß man den Beutel bei einer Temperatur, die gemäß der Vertriebsart ausgewählt ist, bis zum Augenblick seiner Verwendung hält.

2. Verfahren nach Anspruch 1, dadurch gekennzeichnet, daß man mit dem Schalentier oder dem anderen Nahrungsmittel die gewünschten Gewürze in den Beutel vor Versiegelung gibt.

3. Verfahren nach einem der vorhergehenden Ansprüche, dadurch gekennzeichnet, daß allein $CO_2$ unter einem Druck zwischen 0,1 und 0,5 bar injiziert wird.

4. Verfahren nach einem der Ansprüche 1 bis 3, dadurch gekennzeichnet, daß ein Gas, gebildet aus $CO_2/O$, mit 80 bis 95% $CO_2$ und 20 bis 5% O, injiziert wird.

5. Verfahren nach wenigstens einem der Ansprüche 1,2 und 4, dadurch gekennzeichnet, daß ein Gas injiziert wird, gebildet aus $CO_2$, O und Stickstoff, mit einem prozentualen Anteil von $CO_2$/Stickstoff, der 50/50 ist, und von O, der zwischen 20 und 5% des $CO_2$ liegt (vorzugsweise 5%), und daß eine Temperatur des Kochens unter Dampfdruck bis auf 130 °C eingehalten wird.

6. Verfahren nach einem der Ansprüche 1,2, dadurch gekennzeichnet, daß $CO_2$ und Stickstoff im prozentualen Anteil von 5 bis 95% $CO_2$ und 95 bis 5% Stickstoff injiziert wird.

7. Verfahren nach einem der Ansprüche 1, 2, dadurch gekennzeichnet, daß allein Stickstoff injiziert wird, unter einem Druck von 0,1 bis 0, 5 bar, und daß das Behältnis mit seinem Inhalt einer Temperatur von 70 bis 130 °C während einer Dauer von 40 bis 70 Minuten ausgesetzt wird und daß auf +5 bis -40 °C abgekühlt wird.

8. Verfahren nach einem der Ansprüche 1, 2, 3, 4, 5, 6, 7, dadurch gekennzeichnet, daß Helium unter einem Druck von 0,05 bis 0,30 bar injiziert wird und daß der Beutelbehälter mit seinem Inhalt einem Kochen unter Dampf bei einer Temperatur von 40 bis 130 während einer Dauer von 1 bis einigen Stunden ausgesetzt wird und daß auf +5 bis -40 °C abgekühlt wird, gemäß der gewünschten Handelsform frisch, tiefgekühlt, tiefgefroren, pasteurisiert, sterilisiert.

9. Verfahren nach einem der Ansprüche 1, 2, 3, 4, 5, 6, 7, 8, dadurch gekennzeichnet, daß man jedes Gerät zum Kochen (Ofen, Wasserbad, Autoklav oder ähnliches, Mikrowellengerät, Infrarotgerät, usw.), und jede Methode zum Abkühlen (Kälte auf kryogenischem, mechanischem, flüssigem Weg) verwendet, um ein Kochen unter Gasatmosphäre zu erhalten, wie in den vorhergehenden Ansprüchen definiert.

10. Krustentiere, Muscheln und andere Nahrungsmittel, gekocht gemäß dem einem oder anderen der vorangehenden Ansprüche und geeignet, um auf den Markt gebracht zu werden zur Verwendung im frischen, tiefgefrorenen oder sterilen Zustand.